# EUROPEAN PATENT APPLICATION

(11) **EP 2 116 218 A1**
(43) Date of publication of application: **11.11.2009**
(21) Application number: 08075595.2
(22) Date of filing: 02.07.2008
(51) Int. Cl.: A61H 3/04

(54) **Walking aid adapted for mounting a height obstacle**

(30) Priority: 09.05.2008 NL 1035406
(71) Applicant: CHK Develop B.V., 3047 AT Rotterdam (NL)
(72) Inventor: Spaven, John William, 2628 EH Delft (NL); Van Leeuwen, Sander Adrianus, 2516 ED Den Haag (NL); Geels, Abke, 2635 HA Den Hoorn (NL)
(74) Representative: Brookhuis, Hendrik Jan Arnold

(57) **Abstract**

The present invention relates to a walking aid adapted for mounting a height obstacle. The walking aid comprises a frame with a front and a back, and at least two rear wheels and at least one front wheel. The front wheel is supported by a front wheel carrier which is moveably connected to the frame for supporting the at least one front wheel such that it is moveable with respect to the frame between a lower forward position for supporting the frame on the surface and a higher backward position.

The walking aid further comprises at least one temporarily forward support member provided at the front of the frame for supporting the frame on the surface when the at least one front wheel is in the higher backward position, which temporarily support member is connected to the frame such that the underside of the temporarily support member is at a distance from the support surface when the frame is supported by the at least one front wheel in the forward position.

## Description

The present invention relates to a walking aid adapted for mounting a height obstacle. A walking aid is also known as rollator, and is typically movable by manpower in a forward walking direction for use by a walking impaired person. More in particular, the invention relates to a rollator facilitating to negotiate a height obstacle.

In practice, low obstacles such as a threshold, a somewhat elevated manhole cover in the side walk, or pavement slaps which are out of level can be negotiated with little difficulty by a walking aid. However, height obstacles such as kerb stones and elevated floor sections, terraces, and so forth require substantial effort of the user to be mounted with known rollators. The walking impaired encounters these kinds of obstacles everywhere where the environment is not purpose built for walking impaired people or where special implements have not been made available for traversing such obstacles.

When the wheels of a rollator being moved in a forward direction meet a height obstacle, such as a kerb stone, the forward movement of the rollator is halted. To negotiate such an obstacle a known rollator should be substantially tilted backward to raise the front wheels of the rollator above the height obstacle. Subsequently, the rollator should be moved in the forward direction while in the tilted position, until the rear wheels can be lifted onto the height obstacle as well.

Tilting the rollator backwards may result in backwards motion of the hand grips to above or even behind the back wheels. The rollator then provides less stability, or may even not be able to provide support for the walking impaired person while being moved forwards with its front wheels on the height obstacle and its rear wheels still on the support surface. This is especially detrimental since a person in need of a rollator needs extra support when mounting an obstacle.

Furthermore, when the rollator is in the tilted position the centre of the gravity of the walking aid is moved towards the rear wheels. Because of this backward movement of the centre of gravity the risk exists that the user together with the rollator will tumble backward.

Especially elderly people, who form the majority of the user group of rollators, may easily lose balance when mounting an obstacle. Furthermore, a fall can have disastrous consequences since their bone structure often is very fragile. Falls can, therefore, cause broken pelvises, broken bones etc. which will cause extended rehabilitation as well as, in some instances, cause irreparable damages.

It is an object of the invention to completely or partially resolve one or more of the above drawbacks, so as to provide an improved walking aid with an increased ease of use when passing over height obstacles such as curb stones, differences in elevations, and so forth, with a reduced risk of falling.

To this end, the invention provides a walking aid according to claim 1.

The at least one front wheel of a rollator according to the invention supports the frame during normal use, that is when the rollator is moved over a substantially flat surface and when negotiating small obstacles such as thresholds. When the rollator encounters a height obstacle, for example a kerb stone approached from the street, the front wheel will be blocked in its forward movement. Because the front wheel is connected to the frame via the front wheel carrier, the wheel is moveable relative to the frame. While the rollator is pushed forward, the front wheel is moved with respect to the frame in a backward direction, from the forward position into the backward position. Thus the fact that the front wheels hit the height obstacle does not substantially block the movement of the rollator in the forward direction, and the rollator is moved onto the obstacle.

When the front wheel is moved out of its forward lower position towards its higher backward position, the front of the frame lowers until the forward support contacts the upper surface of the obstacle. In this position the frame is no longer supported by the front wheel(s) on the support surface, but by the forward support on the surface of the obstacle. The rollator remains in a stable and substantial upright position and can thus provide support to the user. The effective wheel base is not reduced.

When the front wheel is in the backward position, it is pulled in the walking direction by the frame via the front wheel carrier. The force enacted via the front wheel carrier upon the wheel for dragging it onto the obstacle comprises a component extending in an upward direction, lifting the wheel. Thus, by pushing the rollator in the forward direction the front wheel is pulled onto the curb without much hassle.

The front wheel can be brought back into the lower forward position by return mechanism. Preferably, spring means are provided for urging the front wheels into the forward position so that this action takes place more or less automatically.

Thus, the invention provides a rollator for negotiating a height obstacle with an increased ease of use and a reduced risk of falling.

Advantageous embodiments of the rollator are disclosed in the subclaims and in the description referring to the drawings.

In the drawings;
Fig. 1 shows a schematic 3d view of a rollator according to the invention; and
Figs. 2-6 show subsequent positions of the rollator of Fig. 1, each position shown in a 3d view and in a side view, when mounting an obstacle;
Fig 7 shows a schematic enlarged view of a front section of a rollator according to the invention with front wheel in the lower forward position;
Fig. 8 shows a schematic enlarged view of a front section of a rollator of Fig. 7 with the front wheel in the upper backward position;
Figs. 9-11 show subsequent positions of the rollator of Fig. 1 being folded into a storage position;
Fig. 12 shows an exploded view of an omni wheel according to the invention; and
Fig. 13 shows some parts of the omni wheel of Fig. 12.

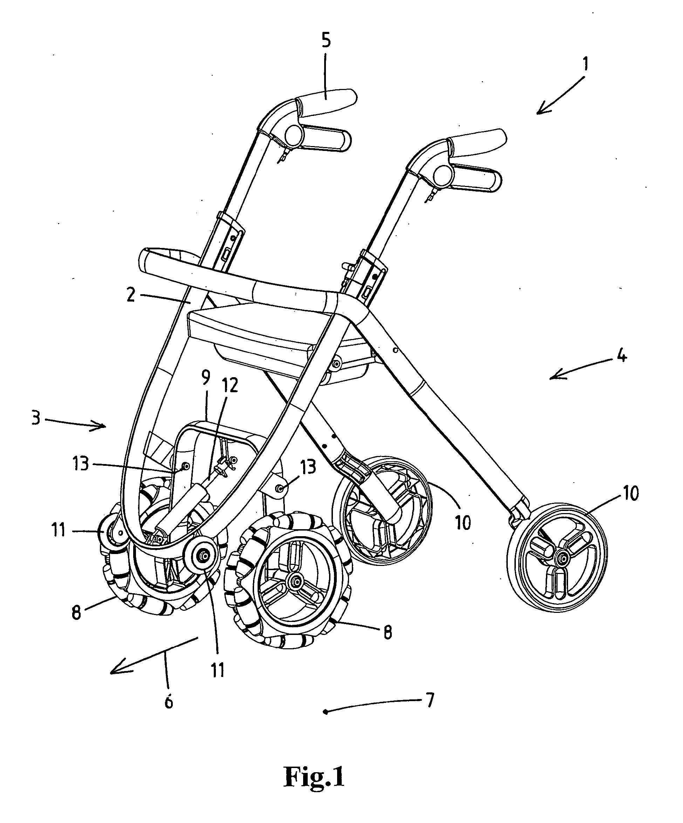

Fig. 1 shows an exemplary embodiment of a rollator 1 according to the invention. The rollator comprises a frame 2 with a front 3 and a back 4. The frame 2 is provided with hand grip means 5 at the back of the frame 4, for a user to engage the rollator 1 and to move it in a forward walking direction, indicated with arrow 6, over a surface 7.

The rollator 1 is further provided with two rear wheels 10 provide at the back of the frame 4 for supporting the rollator on the support surface 7. The rear wheels 10 are spaced apart so that the person using the rollator can stand and/or place his feet between them.

A rollator according to the invention comprises at least one front wheel, provided at the front of the frame. A rollator may for example have two rear wheels and one central front wheel. The preferred embodiment shown is provided with two front wheels 8 providing the rollator 1 with extra stability.

A front wheel according to the invention is connected to the frame via a front wheel carrier. The front wheel carrier supports the at least one front wheel such that the front wheel is moveable with respect to the frame between a lower forward position for supporting the frame on the surface and a higher backward position. In the embodiment shown, the front wheel carrier is a support arm 9 in the form of an inverted U-shaped bracket, which is mounted to the frame 2 at carrier pivot points 13 to support both front wheels 8 such that they are moveable along an arc shaped path between the lower forward position for supporting the frame 2 on the surface 7 and a higher backward position for mounting a height obstacle. In fig 1, the rollator 1 is shown with its front wheels 8 in the lower forward position.

In an alternative embodiment, the front wheel carrier may for example be a linkage system or a guide comprising slots for moveably supporting the axis of the front wheel for movement of the front wheel between the lower forward position and the higher backward position relative to the frame.

A rollator according to the invention further comprises at least one temporarily forward support member provided at the front of the frame for supporting the frame on the surface when the at least one front wheel is in the higher backward position, which temporarily support member is connected to the frame such that the underside of the temporarily support member is at a distance from the support surface when the frame is supported by the at least one front wheel in the forward position.

The rollator 1 shown is provided with two wheels as temporarily forward support members 11. Alternatively, a support member may be ball shaped, or a skid block etc. or any other shape or form for slideable or rotatable supporting the frame on a surface.

It is noted that the rollator shown is simplified to more clearly illustrate the invention. In practice, the rollator may for example be provided with handbrakes for blocking the rear and/or front wheels, with a support surface to provide the user with a seat for resting, with stashing means such as a basket removable connected to the frame, etc.

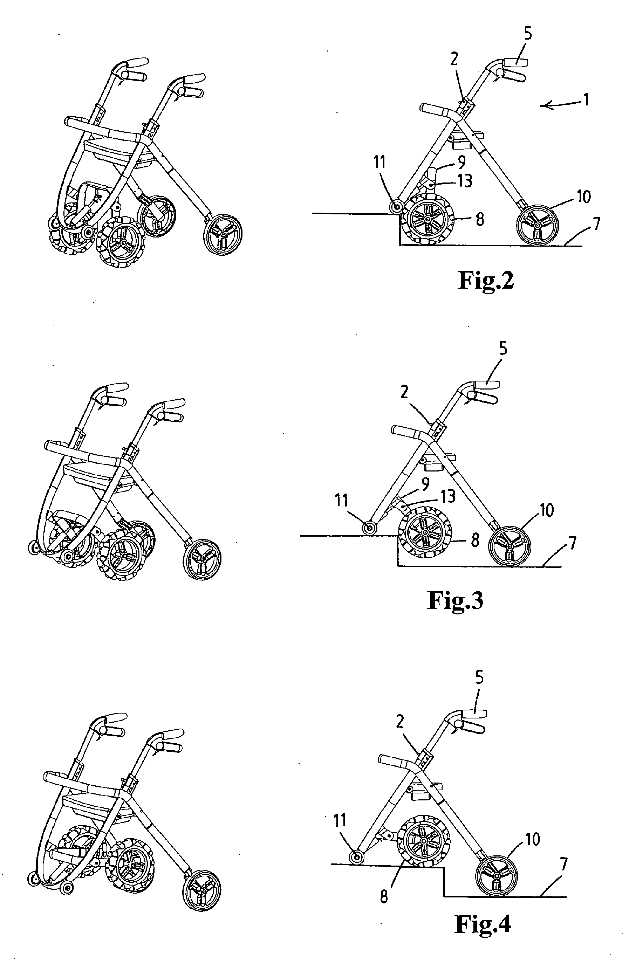

Fig. 2-6 show subsequent positions of the exemplary embodiment shown in Fig. 1 when mounting an obstacle. For each position the rollator is shown in a 3d perspective view as well as in a side view showing the position of the rollator relative to the obstacle.

During normal use, when the rollator is moved over a substantially flat support surface and when negotiating small obstacles such as thresholds, the front wheel of the rollator is in the lower forward position. The frame is supported by the front and back wheels on the surface.

When the rollator encounters a substantial threshold, for example a kerb stone approached from the street, the front wheels will be blocked in their forward movement. This position of the rollator is shown in Fig. 2.

The forward pressure exerted by the user for moving the rollator in the forward walking direction results in a force in the backward direction, enacted by the curb onto the front wheels. This force moves the front wheels relative to the frame in a backward direction, and from the lower forward position into the higher backward position, as is shown in Fig. 3. Thus, the blocking of the front wheels does not substantially block the movement of the rollator in the forward direction, and the rollator is moved onto the curb.

With the frame moving in the forward direction, the at least temporarily forward support member is positioned above the obstacle, as shown in Figs. 2-4. In the position shown in Fig. 2 the frame is supported by the front wheel. Because the front wheel is subsequently moved out of its forward lower position towards its higher backward position relative to the frame, the front wheel no longer supports the front of the frame. Thus the front of the frame lowers until the forward support member, in the embodiment shown support wheels, contacts the upper surface of the obstacle, shown in Fig. 1.

In this position the frame is no longer supported by the front wheel on the surface, but by the support member on the surface of the obstacle. The rollator is thus moved in the forward direction in a stable and substantial upright position and can thus provide support to the user.

In the preferred embodiment shown, the temporarily forward support member is arranged further to the front than the front wheels in the lower forward position. Thus the forward support member is already positioned above the obstacle when the front wheels move out of the forward position. Thus the forward support only needs to move a little or not at all in the downward direction to contact the obstacle to support the frame. Thus the frame will only pivot a little in the forward direction. Furthermore, the moment between the forward wheel moving out of the forward position and the forward support supporting the frame is minimized.

Preferably, the vertical distance between the forward support member and the surface on which the rollator approached the obstacle is equal to the height of the obstacle. Thus the forward support member easily slides onto the obstacle and instantly provides support to the frame. In practice however, this will almost never be the case, for example because not all kerbs are of similar height.

Therefore the distance preferably is equal to the average height of the obstacles to be mounted, for example a kerb stones with an average height of 15 cm. When an obstacle is smaller than the 15 cm distance between the forward support and the surface, the frame will tilt a little in the forward direction while mounting the kerb. When the obstacle is a little higher than the 15 cm distance between the forward support member and the support surface, the frame is tilted a little in the backward direction while mounting the obstacle.

Preferably, the forward support member is provided with a curved surface or is wheel shaped to facilitate gliding over the surface of the obstacle. Furthermore, a curved or angled surface may also facilitate mounting the obstacle when it is a little higher than the distance between the guide member and the surface.

In a preferred embodiment, the distance between the underside of the at least one temporarily support member and the support surface is at least 10 cm, preferably between 10 cm and 20 cm preferably 15 cm. With such a distance between the forward support member and the support surface most obstacles can be mounted.

In a further preferred embodiment, the position of the at least one temporarily forward support member is adjustable relative to the frame such that the distance between the forward support member, in particular its underside or contact surface for contacting the obstacle, and a surface supporting the rollator during normal use can be adjusted. In this way, the distance can be adapted to fit most obstacles. When for example generally used for mounting relatively high or relativity low obstacles, the distance may be adjusted to the height of these obstacles, minimize tilting of the frame when mounting them.

While the frame is moved onto the curb, as is shown in Fig. 3 and Fig. 4, the front wheel is moved into the backward position. In the preferred embodiment shown, the front wheels 8 are connected to the frame 2 via a bracket 9 which is pivotably mounted to the frame. When the front wheel is in the backward position, it is pulled forward by the bracket. Pulling the wheels onto the kerb proceeds relatively easy compared to pushing it up unto the curb. The force enacted via the support arm upon the wheel for dragging it onto the obstacle comprises a vertical component moving the wheel in an upward direction while the frame is pushed in the walking direction. Thus, by pushing the rollator in the forward direction the front wheel is pulled onto the curb without much hassle.

When the front wheels are positioned on the obstacle, the front wheels can be brought into the forward position by a return mechanism. In the embodiment shown, a return mechanism comprising spring means 12 is provided for urging the front wheels into the lower forward position. The spring means shown are in the form of a gas spring comprising a pressurised cylinder and a piston arm, connected with one end to the frame 2 and with the opposite end to the bracket 9. When the front wheel is moved into the backward position, the gas spring was compressed between the bracket and the frame. The mounted pressure in the cylinder can be used for moving the front wheels back into the forward position. When the spring members are of sufficient force, the user does not actively have to tip the frame backwards for reposition the front wheels in the forward position. By simply reducing the downward force upon the frame, e.g. less leaning down on the rollator, the spring members may urge the wheels back into the forward lower position lifting the front of the frame. Thus the user can keep his hands on the grips during the process.

Alternatively, the return mechanism may comprise spring means connected to other parts of the front wheel support and the frame. A spring element may for example be a coil spring with one end be connected to the bracket supporting the front wheels and/or with the opposite end to the back part of the frame such that the spring is compressed when the front wheel moves out of the forward lower position. Also, a torsion spring can be used which may be provided coaxial with the front wheel carrier pivot point, connected with one end to the bracket and with one end to the frame.

Furthermore, the return mechanism may comprise a user operated lever mechanism for returning the wheels manually.

The user may choose the moment at which he or she wants to move the front wheels from the backward position into the forward position.

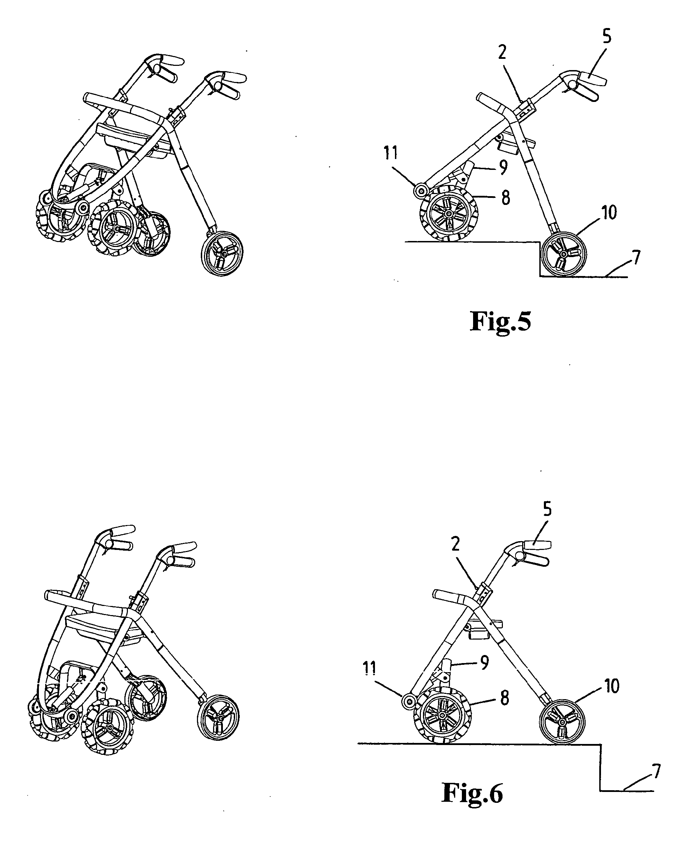

For example, when the back wheels are positioned against the obstacle, situation shown in Fig. 5, the user mounts the obstacle, slightly lifts the back of the rollator and pulls the back wheels onto the obstacle, and subsequently lets the return mechanism reposition the front wheels in the forward position. As is shown in Fig. 6, the frame is again supported by the front and rear wheels now all positioned on the new surface formed by the topside of the obstacle. Thus the rollator continuously provides support during the approach and the mounting of the obstacle.

Alternatively, when the back wheels are positioned against the obstacle, the user of the rollator may choose to first let the return mechanism reposition the front wheels in the forward position, and then lift the back of the frame with the rear wheels onto the obstacle, and to subsequently mount the obstacle himself. Thus, the user can mount the obstacle without letting loose of the hand grips.

Other methods are possible to arrive at the position shown in Fig. 6. Thus, the user is able to mount the obstacle aided by the rollator, and in a controlled manner. Also, this is achieved with a simple mechanism, the invention thus providing a solution which can be produced at low costs. Thus, the invention provides a rollator for negotiating a height obstacle with an increased ease of use and a reduced risk of falling.

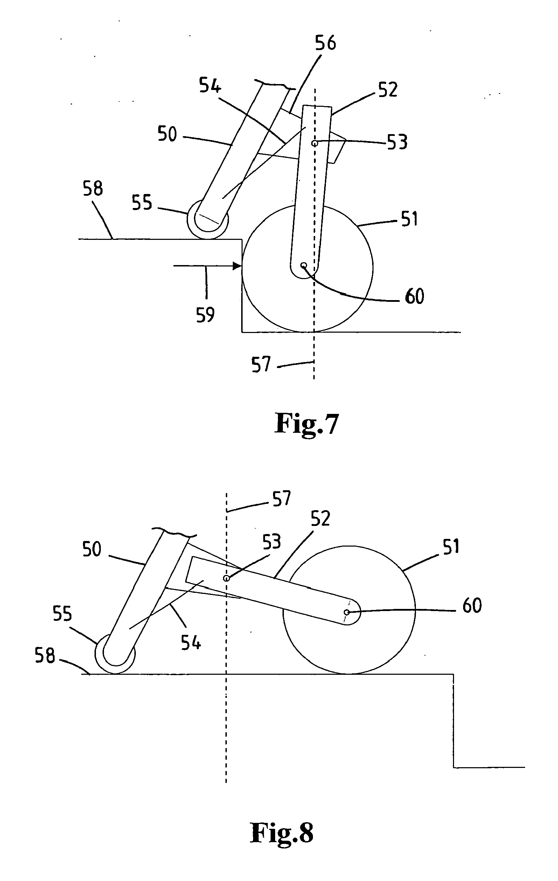

Fig. 7 and Fig. 8 show an enlarged view of the front section of a rollator according to the invention, Fig. 7 showing the front wheel 51 in the forward lower position and Fig. 8 showing the front wheel 51 in the upper backward position.

In both figures only a front section 50 of the frame is shown. The frame 50 is provided with a forward support member in the form of a wheel 55 and with an arm 56 connected via a carrier pivot point 53 to a front wheel carrier 52 supporting front wheel 51. A return mechanism comprising a spring member 54 is connected with one end to the front wheel carrier 52 and with its opposite end to the frame 50.

With the front wheel 51 in the forward lower position the spring means 54 are in or near its extend state, preferably providing a little pressure to support the front wheel in the forward position.

In Figure 7 the front wheel is shown in its lower forward position, the axis 60 of the front wheel 51 is positioned on the front side of a vertical 57 through the carrier pivot point 53 supporting the arm or front wheel carrier 52. Abutment means are provided (not shown) to prevent the arm shaped carrier 52 from rotating in the forward direction (clockwise relative to the pivot point 53). Thus, when the wheel 51 is in the shown forward position it can not pivot out of position when the frame is loaded with a vertical force, for example by a person leaning down on the rollator.

When the rollator is moved in a forward direction the curb 58 will exert a force upon the front wheel 51, indicated with an arrow 59. When this force is large enough, it will push the front wheel 51 out of its forward position, slightly lifting the front 50 of the frame when the front wheel carrier 52 moves through the vertical 57.

Fig. 8 shows the front section of the rollator with the front wheel 51 in the upper backward position, resting on the kerb 58. In this position the spring member 54 is in the compressed state, exerting a force on the front wheel carrier 52 for urging the front wheel 51 towards the lower forward position. Preferably, the force exerted by the spring member is such that when no downward pressure is exerted on the rollator by a user, the wheels will be rotated back into the forward position by the return mechanism. Thus, a person using the rollator may return the wheels in the forward position by simply reducing the downward pressure on the handgrips.

In the preferred embodiment shown, the at least one front wheel carrier 52 is pivotably connected to the frame via the carrier pivot point 53 such that the at least one front wheel 51 is moved along an arc shaped path when moved between the lower forward position and the higher backward position.

The axis 60 of the at least one front wheel 51, when in the forward position, is positioned on the front side of a vertical 57 through the carrier pivot point 53, and is positioned on the backside of the vertical 57 when the at least one front wheel 51 is in the higher backward position. Thus, when the front wheel 51 is moved from the forward position to the backward position, the front wheel carrier 52 comes in line with the vertical 57 through the pivot point, raising said pivot point in an upward direction. Moving the wheel axis through the vertical line thus requires extra force in the forward direction and/or a reduction of force exerted in the downward direction onto the frame, and thus provides a threshold preventing the front wheel to be moved out of the forward position by only a slight force enacted upon the front wheels while moving in the walking direction. Thus it is prevented that the front wheel may for example move out of position when the rollator encounters a relatively rough surface such as a rug or doormat.

Also, when a vertical force is exerted on the frame with front wheel in the forward position and its axis on the front side of the vertical through the front wheel carrier pivot point, the front wheel is forced into the forward position and thus able to support the frame.

Preferably, the axis of the front wheel, when in the forward position, is positioned only at a small distance of the vertical through the pivot point, such that the frame only needs be tilted a little to move the front wheel from the forward position to the backward position.

In a further embodiment the rollator is provided with a user operable latch mechanism for locking the at least one front wheel in the forward position such that upon release of the latch mechanism the at least one front wheel is movable between the forward position and the backward position.

With the at least one front wheel locked in the forward position it can be prevented from moving into the backward position for example when moving the rollator in a forward direction over a rough surface or terrain, such as sand path, or when dismounting a obstacle such as a kerb stone.

The forward support member is preferably positioned forward of, and in line with the at least one front wheel. Thus the forward support is already positioned above the obstacle when it is encountered by the front wheel. Thus support is already in contact with, or only needs to be lowered over a limited distance to contact the surface of the obstacle and to support the frame. Furthermore, the frame is supported by the support member at a location in line with and close to the location at which it is supported when the front wheel is in the forward position. This continuity provides extra stability when mounting the obstacle.

Preferably the frame of the rollator is an inverted V- frame, referring to the side view of the rollator, comprising at least one front leg and two back legs, the back legs providing room in-between them for a person to stand and to engage hand grips mounted to the top of the inverted V-frame. In a further embodiment the frame is a double inverted V-frame with two front legs and two back legs, the two front legs providing extra stability.

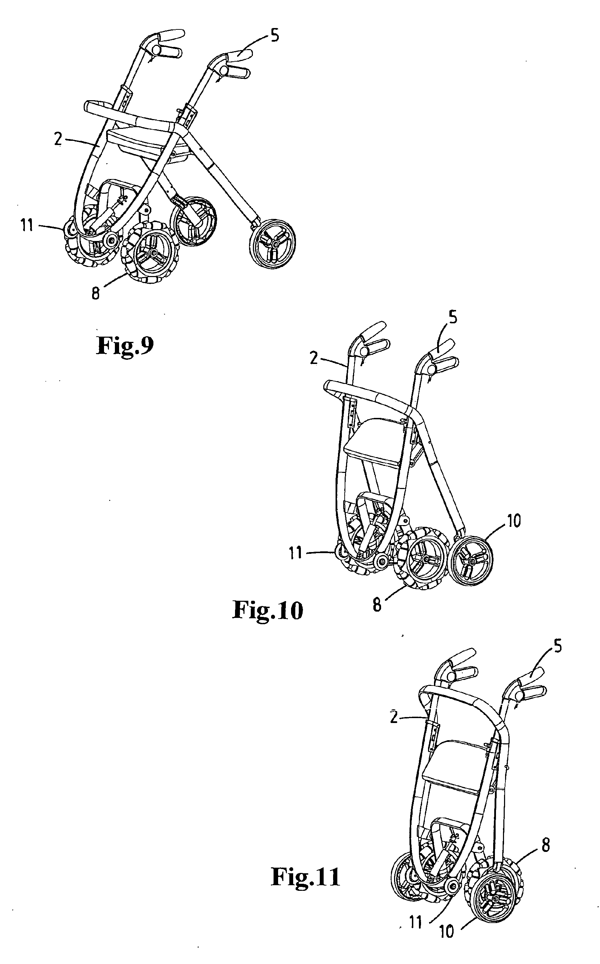

Preferably the frame is a collapsible frame configured for movement between an unfolded use position and a folded storage position. Figs. 9-11 show subsequent positions of a rollator according to the invention being folded in a storage position. The double inverted V-frame is provided with hinge a hinge mechanism where the front legs and the beg legs meet, enabling the back legs to be folded against the front legs of the frame. In the preferred embodiment shown, when in the storage position, the back wheels are positioned relative to the front wheels such that the centre of gravity of the rollator is positioned in-between the wheels and the rollator can stand in an upright position. Thus, the rollator, when in the storage position, has a small footprint, and can be easily stored in a small storage space or close along the wall of a hallway, etc

Preferably the front wheel carrier is compact, for example a support arm of limited length, with the distance between the pivot point and the axis of the wheel substantially equal to the radius of the wheels. With a compact front wheel carrier the rollator can be of a compact design and may be foldable in a compact storage position. Preferably, the distance between the pivot point and the axis of the front wheel is larger than the radius of the front wheel.

In the embodiment shown, the axes of the front wheels have a fixed orientation relative to the frame. in a preferred embodiment, the at least one front wheel is an omni wheel. An omni wheel, also known as poly wheel, is a wheel which can move in any direction. The wheels are provided with small discs or cylindrical bodies around the circumference which are perpendicular to the rolling direction. The effect is that the wheel will roll with full force, but will also slide laterally with great ease.

Thus the front wheels are provided with extra manoeuvrability without the need of castor wheels. Omni wheels facilitate the positioning of the front wheels against a height obstacle to be mounted, since they allow the rollator to be moved along a line while alternating movement in a forward and backward direction.

Preferably the rollator is provided with a front wheel having a diameter between 20 cm and 30 cm, preferably a diameter of 25 cm. Such a wheel size facilitates negotiating obstacles of small seize relative to the diameter of the wheel, such as thresholds.

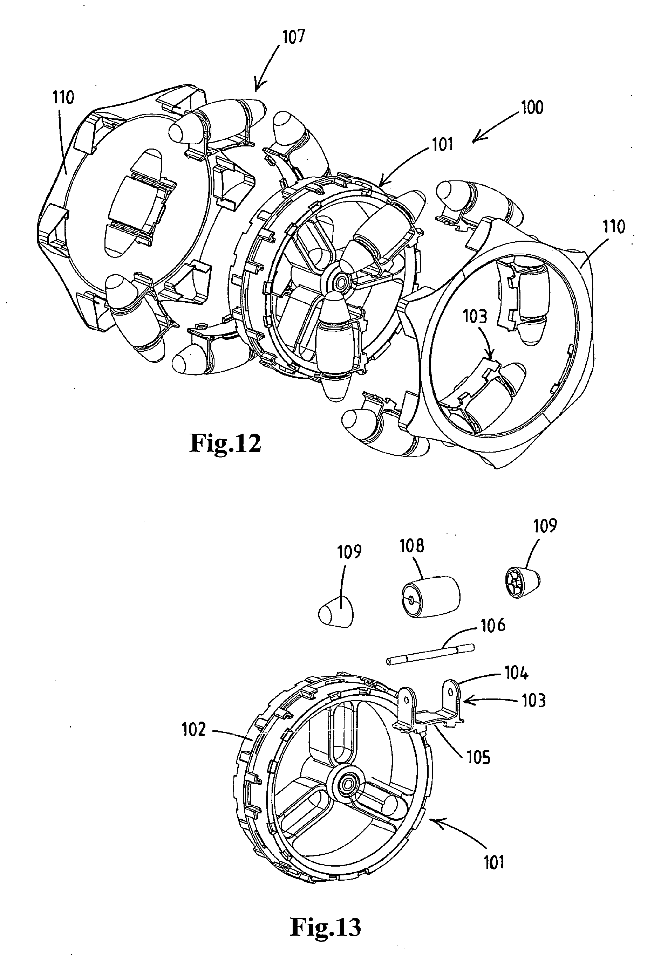

According to a second aspect of the invention, an omni wheel 100 is provided, which omni wheel comprises a central wheel frame 101 rotatable about a main axis. The wheel frame 101 comprises multiple cradles 102 for engaging U-shaped roller support frames 103 for supporting rollers 107 along the rim of the wheel frame. An exploded view of the omni wheel is shown in Fig. 12, Figs. 1-6 show the omni wheel in the mounted state, Fig 13 shows some elements of the omni wheel.

The cradles are distributed along the rim for supporting a first series of rollers regularly spaced in a first plane transverse to the main axis and radially spaced from a central hub of the wheel frame and a second series of rollers regularly spaced in a second plane transverse to the main axis and radially spaced from the central hub. When viewed in side elevation, each roller of the first series of rollers overlaps with each diagonally adjacent roller of the second series of rollers such that the wheel is capable of making effective ground contact through the main body of at least one of the rollers at any one time.

The U-shaped roller support frames 103 each comprise two parallel support tabs 104, the legs of the U-form, with an opening for supporting a roller body support axle 106. The tabs are connected via a central frame part 105. The central frame part is shaped for cooperation with the cradles 102 of the wheel frame 101 such that the U-shaped roller support frame can be slid in a direction parallel to the wheel frame axis into the cradles. In addition or as an alternative, fastening means such as screws may be provided for fastening of the support frames in the cradles.

Each roller 107 comprises a central main body 108 wherein the lateral central cross-sectional diameter is greater then the diameter of the end portions, and two separate conical shaped end portions 109. In mounted condition the central main body of the roller is supported in-between the two tabs 104 and the two conical end portions 109 on the outside of the tabs. The three roller body parts are connected via the roller support axle, which is supported by the tabs of the U-shaped roller support frame.

In a preferred embodiment one or more covers 110 are provided to shield at least part of the wheel frame and/or part of the roller bodies.

The wheel frame comprising the cradles may be formed in a number of ways. The wheel frame and cradles may be moulded or machined using metal working techniques which are standard in the art. The wheel frame may be formed of a hybrid of metal and plastic components. These may be subsequently joined to form the wheel frame. For example, the central hub may be made out of a metal, such as cast iron, aluminium or stainless steel and the supports may be made from plastic. The wheel frame and the cradles may be made from one or more plastic materials formed integrally or subsequently joined to form the frame. Preferably, the wheel frame and cradles are integrally formed by injection moulding using a suitable plastic material.

Because the rollers are supported in U-shaped roller support frames, which are designed to cooperate with the cradles on the wheel frame, the roller bodies can be fit to the wheel frame in a simple manner. Furthermore, when a roller gets damaged or worn, it can relatively easily be replaced by removing the support frame.

The invention is by no means limited to the exemplary embodiment described herein above, but comprises various modifications hereto, in so far as they fall within the scope of the following claims.

## Claims

1. A walking aid adapted for mounting a height obstacle, the walking aid comprising:
- a frame with a front and a back;
- hand grip means, provided on the frame, for a user to engage the walking aid and to move the walking aid in a forward walking direction over a surface;
- at least two rear wheels provide at the back of the frame for supporting the frame on the surface;
- at least one front wheel, provided at the front of the frame;
- a front wheel carrier, which front wheel carrier is moveably connected to the frame for supporting the at least one front wheel such that it is moveable with respect to the frame between a lower forward position for supporting the frame on the surface and a higher backward position; and
- at least one temporarily forward support member provided at the front of the frame for supporting the frame on the surface when the at least one front wheel is in the higher backward position, which temporarily support member is connected to the frame such that the underside of the temporarily support member is at a distance from the support surface when the frame is supported by the at least one front wheel in the forward position.

2. Walking aid according to claim 1, wherein the at least one front wheel carrier is pivotably connected to the frame via a carrier pivot point such that the at least one front wheel is moved along an arc shaped path when moved between the lower forward position and the higher backward position.

3. Walking aid according to claim 2, wherein the axis of the at least one front wheel, when in the lower forward position, is positioned on the front side of a vertical through the carrier pivot point, and is positioned on the backside of the vertical when the at least one front wheel is in the higher backward position.

4. Walking aid according to any of the previous claims, wherein the temporarily forward support member is arranged further to the front than the at least one front wheel when in the lower forward position.

5. Walking aid according to any of the previous claims, wherein the temporarily forward support member is arranged above the axis of the at least one front wheel when in the lower forward position.

6. Walking aid according to any of the previous claims, provided with a user operable latch mechanism for locking the at least one front wheel in the forward position such that upon release of the latch mechanism the at least one front wheel is movable between the forward position and the backward position.

7. Walking aid according to any of the previous claims, wherein the at least one front wheel is an omni wheel.

8. Walking aid according to any of the previous claims, wherein a return mechanism is provided for urging the front wheel towards the forward position.

9. Walking aid according to claim 8, wherein return mechanism comprises a spring element such as a gas spring or a torsion spring.

10. Walking aid according to any of the previous claims, wherein the distance between the underside of the at least one temporarily support member and the support surface is at least 10 cm, preferably between 10 cm and 20 cm when the at least one front wheel is in the lower forward position.

11. Walking aid according to any of the previous claims, wherein the position of the at least one temporarily forward support member is adjustable relative to the frame.

12. Walking aid according to any of the previous claims, wherein the temporarily forward support member is positioned in line with the at least one front wheel when in the lower forward position.

13. Omni wheel, for example for use with a walking aid according to the previous claims, comprising:
- a central wheel frame rotatable about a main axis, the wheel frame comprising multiple cradles for -engaging roller support frames for supporting roller bodies along the rim of the wheel frame.;
- multiple rollers, each comprising a central main body wherein the lateral central cross-sectional diameter is greater then the diameter of the end portions, two separate conical shaped end portions and a support axle for in a mounted state connecting the main body with the end portions;
- multiple U-shaped roller support frames, each comprising two support tabs for supporting a roller body support axle such that the main body of the roller is supported inbetween the support tabs and the conical end parts are supported on the outside of the support tabs.

14. Omni wheel according to claim 13, wherein the U-shaped roller support frames are designed for cooperating with the cradles such that the U-shaped roller support frames can be slid in a direction parallel to the wheel frame axis into the cradles.
